# EUROPEAN PATENT APPLICATION

(11) **EP 4 836 284 A1**
(43) Date of publication of application: **04.11.2026**
(21) Application number: 26173076.6
(22) Date of filing: 17.04.2026
(51) Int. Cl.: H02P 5/68, H02P 5/00, H02P 5/50, B60R 11/00

(54) **MOTOR CONTROL APPARATUS, MOTOR CONTROL METHOD, COMPUTER PROGRAM PRODUCT, ON-VEHICLE ELECTRONIC DEVICE, AND VEHICLE**

(30) Priority: 28.04.2025 CN 202510549302
(71) Applicant: Alps Alpine Co., Ltd., Ota-ku, Tokyo 145-8501 (JP)
(72) Inventor: Meng, Qinggeng, Tokyo (JP)
(74) Representative: Schmitt-Nilson Schraud Waibel Wohlfrom Patentanwälte Partnerschaft mbB

(57) **Abstract**

A motor control apparatus, a motor control method, a computer program product, an on-vehicle electronic device, and a vehicle are provided. The apparatus is configured to control at least two motors that drive a same driven device. The apparatus includes a status information acquisition unit configured to acquire at least one of operating status information of each of the at least two motors and device status information of the driven device; a determination unit configured to determine, based on at least one of the operating status information and the device status information acquired by the status information acquisition unit, whether the at least two motors operate synchronously; and a control unit configured to control the at least two motors so that the at least two motors operate synchronously, when the determination unit determines that the at least two motors do not operate synchronously.

## Description

The present disclosure claims priority under 35 U.S.C. §119 to Chinese Application No. 202510549302.2 filed on April 28, 2025.

The present disclosure relates to a motor control apparatus, a motor control method, a computer program product, an on-vehicle electronic device, and a vehicle, and specifically a motor control apparatus, a motor control method, a computer program product, an on-vehicle electronic device, and a vehicle, which control at least two motors that drive a same driven device.

Currently, there are various applications that drive a same driven device to move using at least two motors. In such applications, especially in moving bodies such as vehicles, the motors and the driven device are in a non-static environment. Thus, during the process of driving the same driven device to move using at least two motors, the movement of the driven device is prone to instability. Furthermore, the instability may cause the driven device to collide with other surrounding components, resulting in damage, or cause discomfort to users near the driven device.

Therefore, it is necessary to detect the tendency of the driven device to become unstable as early as possible and make timely adjustments to prevent such instability from occurring.

The present disclosure relates to a motor control apparatus and method according to the appended claims. Embodiments are disclosed in the dependent claims.

According to an aspect of the present disclosure, a motor control apparatus for controlling at least two motors that drive a same driven device is provided. The motor control apparatus includes a status information acquisition unit configured to acquire at least one of operating status information of each of the at least two motors and device status information of the driven device; a determination unit configured to determine, based on at least one of the operating status information and the device status information acquired by the status information acquisition unit, whether the at least two motors operate synchronously; and a control unit configured to control the at least two motors so that the at least two motors operate synchronously, when the determination unit determines that the at least two motors do not operate synchronously.

According to another aspect of the present disclosure, a motor control method for controlling at least two motors that drive a same driven device is provided. The motor control method includes acquiring at least one of operating status information of each of the at least two motors and device status information of the driven device; determining, based on at least one of the operating status information and the device status information, whether the at least two motors operate synchronously; and controlling the at least two motors so that the at least two motors operate synchronously, when the at least two motors do not operate synchronously.

According to another aspect of the present disclosure, a non-transitory computer-readable recording medium having computer-executable instructions for execution by one or more processors is provided. The computer-executable instructions, when executed, cause the one or more processors to carry out a motor control method. The motor control method includes acquiring at least one of operating status information of each of the at least two motors and device status information of the driven device; determining, based on at least one of the operating status information and the device status information, whether the at least two motors operate synchronously; and controlling the at least two motors so that the at least two motors operate synchronously, when the at least two motors do not operate synchronously.

### BRIEF DESCRIPTION OF THE DRAWINGS

FIG. 1 is a schematic diagram showing a specific example to which a motor control apparatus of the present disclosure is applicable.
FIG. 2 is a block diagram showing a configuration of a motor control apparatus according to a first embodiment of the present disclosure.
FIG. 3 is a flowchart showing an operation of the motor control apparatus according to the first embodiment of the present disclosure.
FIG. 4 is a block diagram showing a configuration of a motor control apparatus according to a second embodiment of the present disclosure.
FIG. 5 is a flowchart showing an operation of the motor control apparatus according to the second embodiment of the present disclosure.
FIG. 6 is a block diagram showing a configuration of a motor control apparatus according to a third embodiment of the present disclosure.
FIG. 7 is a flowchart showing an operation of the motor control apparatus according to the third embodiment of the present disclosure.

In the following, a motor control apparatus according to embodiments of the present disclosure will be described with reference to the accompanying drawings.

Furthermore, in the specification and accompanying drawings, only components related to the technical concept of the present disclosure will be described and shown, while illustrations and detailed descriptions of other components will be omitted.

Furthermore, in the specification and accompanying drawings, components having the same or similar functions will be labeled with the same reference numerals, and repeated descriptions will be omitted as appropriate.

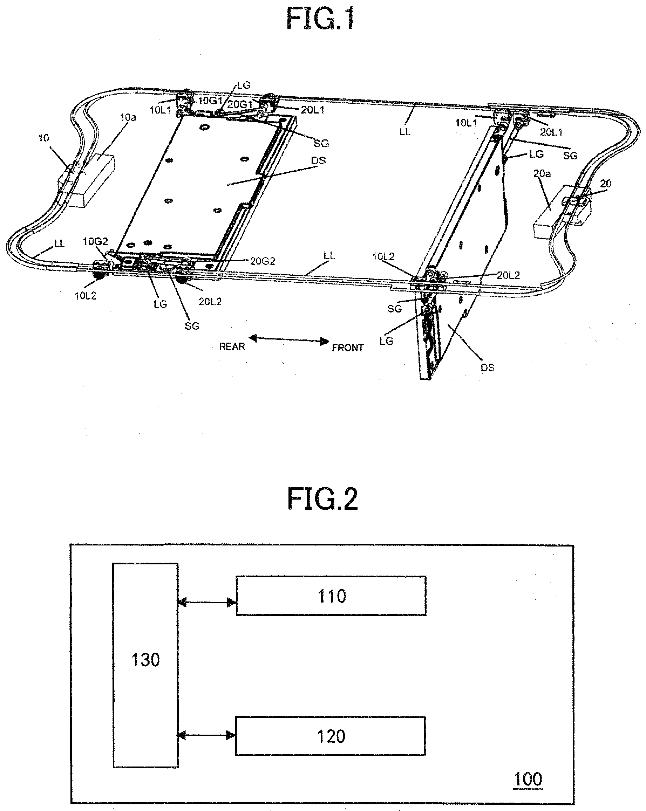

Furthermore, the motor control apparatus of the present disclosure is a motor control apparatus for controlling at least two motors that drive a same driven device to move. Here, a specific example, to which the motor control apparatus of the present disclosure is applicable, will be described as shown in FIG. 1. In the specific example, the motor control apparatus of the present disclosure controls two motors, namely a first motor 10 and a second motor 20, that drive a movable display DS, which is a driven device provided at a roof of a vehicle. However, the motor control apparatus of the present disclosure is applicable to a case of controlling at least two motors that drive the same driven device to move. For example, the structure and operation of the motor control apparatus when controlling three or more motors can be deduced similarly.

Furthermore, in the actual vehicle involved in the specific example shown in FIG. 1, only the same movable display DS is provided. However, for ease of illustration, two states of the same movable display DS are shown simultaneously in FIG. 1. Specifically, FIG. 1 shows both the movable display DS in a folded state (as shown on the left side of FIG. 1) and the movable display DS in an expanded state (being also referred to as an upright state) (as shown on the right side of FIG. 1).

Furthermore, a direction from left to right along a plane of the paper in FIG. 1 is designated as "front", and a direction from right to left along the plane of the paper in FIG. 1 is designated as "rear".

### (Structure of Specific Example shown in FIG. 1)

As shown in FIG. 1, a guide rail LL forming a closed shape is provided at an interior ceiling of the vehicle (not shown). The first motor 10 and a linkage member 10a connected to the first motor 10 are provided at a rear side of the guide rail LL, and the second motor 20 and a linkage member 20a connected to the second motor 20 are provided at a front side of the guide rail LL.

Furthermore, the movable display DS is supported on the guide rail LL via first slider groups 10L1 and 10L2, first fixing rod groups 10G1 and 10G2, second slider groups 20L1 and 20L2, and second fixing rod groups 20G1 and 20G2, respectively.

Furthermore, connecting rods LG on both sides of the movable display DS are connected to the second fixing rod groups 20G1 and 20G2 via rotatable rods SG, respectively.

Although not shown in FIG. 1, in the specific example shown in FIG. 1, the motor control apparatus further includes a power supply for providing power to the first motor 10 and the second motor 20, as well as a controller for controlling the start and stop of operations of the first motor 10 and the second motor 20. The power supply and controller may be, for example, chips, circuit boards, etc.

### (Operation of Specific Example shown in FIG. 1)

In the specific example shown in FIG. 1, the movable display DS is driven by the first motor 10 and the second motor 20, causing the movable display DS to move. Specifically, in the specific example, the first motor 10 and the second motor 20 are driven to rotate at a predetermined speed by the controller. The rotation of the first motor 10 and the second motor 20 is transmitted to the connected linkage members 10a and 20a, respectively, thereby causing the movable display DS to move on the guide rail LL via the linkage members 10a and 20a.

Furthermore, through the first slider groups 10L1 and 10L2, the first fixing rod groups 10G1 and 10G2, the second slider groups 20L1 and 20L2, the second fixing rod groups 20G1 and 20G2, the connecting rods LG, and the rotatable rods SG, in a case where neither the first motor 10 nor the second motor 20 operates, the movable display DS is held such that a display surface is approximately parallel to a plane defined by the guide rail LL and the interior ceiling of the vehicle (also referred to as the movable display DS being in the folded state).

When using the movable display DS for video viewing, it is necessary to change the movable display DS from the folded state shown on the left side of FIG. 1 to the expanded state shown on the right side of FIG. 1.

Specifically, when the movable display DS is in the folded state, the controller controls the first motor 10 and the second motor 20 to operate, so that the first motor 10 applies a forward pushing force to the first slider groups 10L1 and 10L2, while the second motor 20 applies a forward pulling force to the second slider groups 20L1 and 20L2. Normally, the first motor 10 and the second motor 20 operate synchronously, causing the movable display DS to maintain the folded state while moving forward at a constant speed, thereby enabling horizontal movement of the movable display DS.

Furthermore, when the movable display DS reaches a horizontal limit position, the controller stops the operation of the second motor 20, while the first motor 10 continues applying the pushing force to the first slider groups 10L1 and 10L2. Thus, the second slider groups 20L1 and 20L2 stop at the limit position, while the first slider groups 10L1 and 10L2 continue the horizontal movement. Accordingly, the rotatable rods SG rotate around the second fixing rod groups 20G1 and 20G2, thereby rotating the movable display DS. When the movable display DS reaches a desired angle, the controller stops the operation of the first motor 10.

Thus, the movable display DS changes from the folded state to the expanded state.

On the other hand, in a case where the movable display DS changes from the expanded state to the folded state, the controller controls the first motor 10 to operate, so that the first motor 10 applies a backward pulling force to the first slider groups 10L1 and 10L2. Simultaneously, the second motor 20 remains inactive. Thus, the first slider groups 10L1 and 10L2 to move horizontally backward, while the second slider groups 20L1 and 20L2 remain stationary at the limit positions. Accordingly, the rotatable rods SG rotate around the second fixing rod groups 20G1 and 20G2, thereby rotating the movable display DS. When the display surface of the movable display DS becomes approximately parallel to the plane defined by the guide rail LL and the interior ceiling of the vehicle, the movable display DS becomes the folded state.

Furthermore, in a case where the movable display DS is in the folded state at the position on the guide rail LL, the controller controls the first motor 10 to continue operating, so that the first motor 10 applies a backward pulling force to the first slider groups 10L1 and 10L2. Simultaneously, the second motor 20 starts to apply a backward pushing force to the second slider groups 20L1 and 20L2. Normally, the first motor 10 and the second motor 20 operate synchronously, so that the movable display DS maintains the folded state while moving backward at a uniform speed, i.e., the movable display DS moves horizontally until the movable display DS reaches an accommodation position, so that the controller stops the operation of the first motor 10 and the second motor 20.

### (Problem in Specific Example shown in FIG. 1)

The applicant has found through research that, in the specific example shown in FIG. 1, in a case where the vehicle travels on uneven roads or passes over speed reducing bumps, the vehicle may vibrate in a vertical direction. Furthermore, the movable display DS is typically large in size and heavy. Thus, when the movable display DS is moving horizontally while the vehicle travels over uneven roads or speed reducing bumps, the movable display DS may tilt or swing downwards due to the vertical force caused by vehicle vibration and its own weight, potentially colliding with vehicle occupants. Even if the movable display DS does not collide with occupants, the downward tilting or swinging of the movable display DS may cause them a sense of insecurity.

As a solution, adding mechanical components could be considered to ensure the movable display DS remains the folded state during horizontal movement. However, the limited space in interior ceiling of the vehicle makes it difficult to ensure space for adding the mechanical components, and there is a problem of insufficient space for maintenance. Furthermore, adding mechanical components increases costs and reduces aesthetics.

The motor control apparatus of the present disclosure can solve the above-mentioned problems existing in the specific example shown in FIG. 1. Hereinafter, various embodiments of the motor control apparatus of the present disclosure will be described in detail. Furthermore, the following description uses the application of the motor control apparatus of the present disclosure in the specific example shown in FIG. 1 as an example, but is not intended to limit the scope.

In view of the problem of conventional technologies, an object of the embodiments of the present disclosure is to provide a motor control apparatus, a motor control method, a computer program product, an on-vehicle electronic device, and a vehicle, which can early and timely detect and adjust the tendency for the movement of a driven device to become unstable, and can prevent such instability from occurring.

### (First Embodiment)

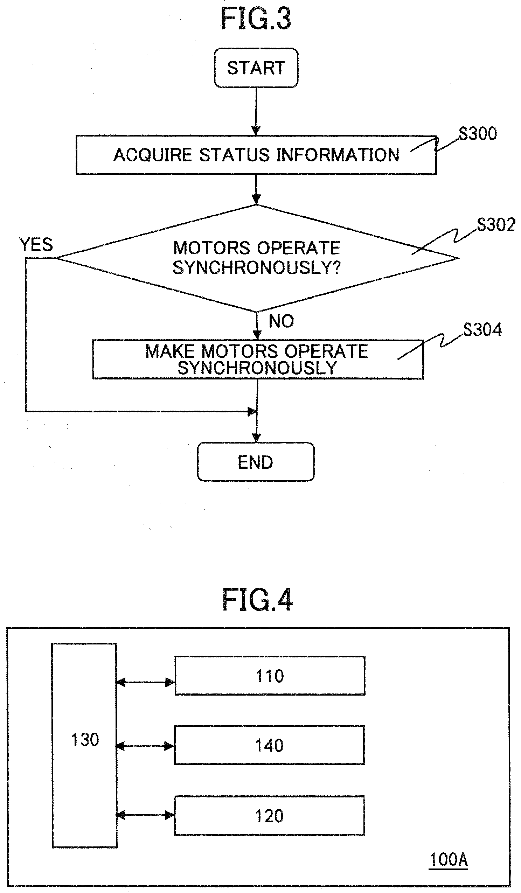

First, referring to FIGs. 2 and 3, a motor control apparatus 100 of a first embodiment of the present disclosure will be described in detail.

### [Configuration of Motor control apparatus 100]

FIG. 2 is a block diagram showing a configuration of the motor control apparatus 100 according to the first embodiment of the present disclosure.

As shown in FIG. 2, the motor control apparatus 100 of the present disclosure controls at least two motors that drive the same driven device to move, and includes a status information acquisition unit 110, a determination unit 120, and a control unit 130.

The status information acquisition unit 110 may be configured, for example, by a component or module with information processing capabilities such as a CPU, an MCU, or the like. The status information acquisition unit 110 may acquire at least one of operating status information of each of the at least two motors and device status information of the driven device.

Here, the operating status information includes, for example, a ripple current and a rotational speed of each of the at least two motors. The device status information includes at least one of an angle, an angle change, a moving speed, and a moving speed change of the driven device during movement.

Here, the status information acquisition unit 110 may acquire at least one of the operating status information of each of the at least two motors and the device status information of the driven device from, for example, the power supply, the controller, external sensors, memory, etc.

Furthermore, the status information acquisition unit 110 may send at least one of the acquired operating status information and device status information to the determination unit 120 and control unit 130 described later, or store the information in a built-in memory or an external memory for retrieval by the determination unit 120 and control unit 130.

The determination unit 120 may be configured as a component or module with information processing capabilities, such as a CPU, an MCU, or the like. The determination unit 120 may determine whether the at least two motors operate synchronously, based on at least one of the operating status information and the device status information acquired by the status information acquisition unit 110.

For example, the determination unit 120 may determine whether a phase difference exists between the at least two motors based on at least one of the operating status information and the device status information, thereby determining whether the at least two motors operate synchronously.

Furthermore, for example, when the operating status information is a ripple current of each of the at least two motors, the determination unit 120 determines whether the phase difference exists between the at least two motors by comparing the ripple currents of the at least two motors. Here, the determination unit 120 may compare frequencies and phases of the ripple currents of the at least two motors to perform the determination. If there is a difference between the frequencies and the phases of the ripple currents of the at least two motors greater than a predetermined value, it is determined that there is a phase difference between the ripple currents of the at least two motors, and it is further determined that there is a phase difference between the at least two motors.

Additionally, for example, when the device status information includes at least one of the angle, the angle change, the moving speed, and the change in moving speed of the driven device during movement, the determination unit 120 may determine that the at least two motors do not operate synchronously when at least one of the following conditions is satisfied: the angle of the driven device during movement is greater than or equal to an angle threshold, the angle change of the driven device during movement is greater than or equal to an angle change threshold, the moving speed of the driven device during movement is less than or equal to a moving speed lower limit, the moving speed of the driven device during movement is greater than or equal to a moving speed upper limit, or the moving speed change of the driven device during movement is greater than or equal to a moving speed change threshold.

Here, the angle threshold, the angle change threshold, the moving speed lower limit, the moving speed upper limit, and the movement speed change threshold may be preset at a factory of a relevant equipment, or may be set or changed by a user according to actual conditions.

Furthermore, when the status information acquisition unit 110 acquires only one type of operating status information of the motor, including at least one of the ripple current and the rotational speed, and the equipment status information including at least one of the angle, the angle change, the movement speed, and the movement speed change of the driven equipment during movement, the determination unit 120 may determine whether the at least two motors operate synchronously only based on the one type of information.

Furthermore, when the status information acquisition unit 110 acquires two or more types of operating status information, including at least one of the ripple current and the rotational speed, and the equipment status information including at least one of the angle, the angle change, the movement speed, and the movement speed change of the driven equipment during movement, the determination unit 120 may determine that the at least two motors do not operate synchronously based on one of the two or more types of information, or may determine that the at least two motors do not operate synchronously based on each of the two types of information separately, thereby improving the reliability and robustness of the determination.

Furthermore, the control unit 130 may be configured, for example, by a component or module with information processing capabilities such as a CPU, an MCU, or the like. The control unit 130 may control the at least two motors so that the at least two motors operate synchronously, when the determination unit 120 determines that the at least two motors do not operate synchronously.

For example, as a first adjustment method, the control unit 130 may adjust an input voltage of at least one of the at least two motors, so that the at least two motors operate synchronously.

As a second adjustment method, the control unit 130 may adjust the input voltage of at least one of the at least two motors by at least one of pulse width modulation, phase modulation, and frequency modulation, so that the at least two motors operate synchronously.

Furthermore, as a third adjustment method, the control unit 130 may adjust the rotational speed of at least one of the at least two motors, so that the at least two motors operate synchronously.

Additionally, as a variation, the control unit 130 may perform the adjustment by simultaneously or sequentially using two or more of the first to third adjustment methods, so that the at least two motors operate synchronously.

Furthermore, for example, in the specific example shown in FIG. 1, the motor control apparatus 100 of the present disclosure may be provided separately from the controller, or may be integrated with the controller by adding electronic components or terminals into the controller.

### [Operation of Motor control apparatus 100]

An operation of a motor control apparatus 100 according to the first embodiment of the present disclosure, i.e., a motor control method, will be described below. FIG. 3 is a flowchart showing an operation of the motor control apparatus 100 according to the first embodiment of the present disclosure.

As shown in FIG. 3, in step S300, the motor control apparatus 100 acquires, by the status information acquisition unit 110, at least one of the operating status information of each of the at least two motors and the device status information of the driven device, and then proceeds to step S302. Here, it is assumed that the ripple currents of the at least two motors are acquired.

In step S302, the motor control apparatus 100 determines, by the determination unit 120, whether the at least two motors operate synchronously, based on at least one of the operating status information and the device status information acquired by the status information acquisition unit 110. When it is determined that the at least two motors operate synchronously ("YES" in step S302:), the process ends; when it is determined that the at least two motors do not operate synchronously ("NO" in step S302), the process proceeds to step S304. Here, it is assumed that the determination unit 120 determines whether there is the phase difference between the ripple currents of the at least two motors, by comparing the ripple currents of the at least two motors. When it is determined that at least two motors do not operate synchronously, the process proceeds to step S304.

In step S304, the motor control apparatus 100 controls, by the control unit 130, the at least two motors so that the at least two motors operate synchronously. Then the process ends. Here, it is assumed that the control unit 130 adjusts the input voltage of one of the at least two motors by using the first adjustment method so that the at least two motors operate synchronously, and then the process ends.

In this way, according to the motor control apparatus 100 of the embodiment, it is possible to early and timely detect the case of the at least two motors not operating synchronously and perform the adjustment so that the at least two motors operate synchronously, during a stage where the operating status of the motor changes, that is, before the movable display of the driven device rotates or swings downwards, by simply implementing the motor control apparatus as an electronic component or adding detection terminals or electronic elements into the controller, without adding mechanical components. Thus, it is possible to early and timely detect and adjust the tendency for the movement of the driven device to become unstable, thereby preventing such instability of the movement of the driven device from occurring.

Furthermore, as a variation, after the control unit 130 performed the adjustment based on the first adjustment method, the determination unit 120 may again determine whether at least two motors operate synchronously. When it is determined that the at least two motors do not operate synchronously, the determination may be performed again, and the process may be repeated until the at least two motors operate synchronously. Therefore, the motor control apparatus 100 of the embodiment can prevent such instability of the movement of the driven device from occurring with high precision and high reliability.

Furthermore, as a variation, in a case where the motor control apparatus 100 performs multiple times of determination based on the determination unit 120 and multiple times of adjustment based on the control unit 130, the conditions for the multiple times of determination, the adjustment methods for the multiple times of adjustment, and adjustment objects may be the same or different. Therefore, the motor control apparatus 100 of the embodiment can prevent such instability of the movement of the driven device from occurring with high precision, high reliability, and high robustness.

Furthermore, as a variation, in the motor control apparatus of the embodiment, the status information acquisition unit 110 may acquire at least one of the operating status information of the at least two motors and the device status information of the driven device at a predetermined interval during the operation of the at least two motors and during the movement of the driven device. However, it is preferable to always acquire at least one of the operating status information of the at least two motors and the device status information of the driven device. Therefore, the motor control apparatus 100 of the embodiment can timely prevent such instability of the movement of the driven device from occurring.

### (Second Embodiment)

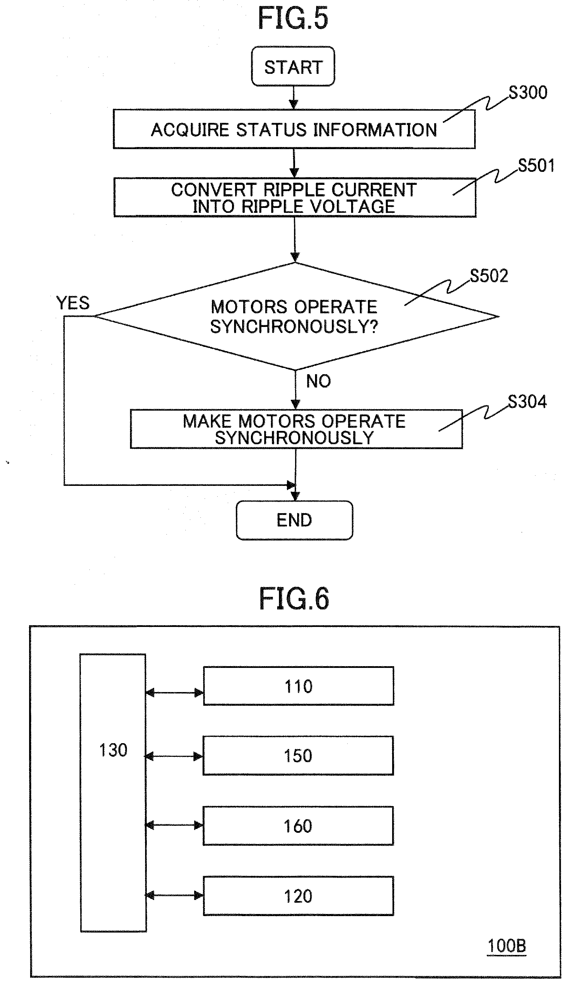

Next, referring to FIGs. 4 and 5, a motor control apparatus 100A of a second embodiment of the present disclosure will be described in detail.

### [Configuration of Motor control apparatus 100A]

FIG. 4 is a block diagram showing a configuration of the motor control apparatus 100A according to the second embodiment of the present disclosure. In FIG. 4, the same reference numerals are used for the same components as those in FIG. 2, which shows the configuration of the motor control apparatus 100 of the first embodiment, and descriptions are omitted.

As shown in FIG. 4, the difference between the motor control apparatus 100A of the second embodiment and the motor control apparatus 100 of the first embodiment is that the motor control apparatus 100A of the second embodiment further includes a conversion unit 140.

The conversion unit 140 may be configured, for example, by a component or a circuit module capable of converting current into voltage, such as a resistor, a capacitor, an inductor, an operational amplifier, a photoelectric sensor or the like. The conversion unit 140 may convert the ripple currents of the at least two motors into ripple voltages of the at least two motors, respectively.

Furthermore, the conversion unit 140 may directly acquire at least one of the operating status information and the device status information in real time from the status information acquisition unit 110, or may retrieve at least one of the operating status information and the device status information stored in its own built-in memory or an external memory.

Additionally, the conversion unit 140 may, similarly to the status information acquisition unit 110, send the converted ripple voltage to the determination unit 120 and control unit 130, or may store the converted ripple voltage in its own built-in memory or an external memory for retrieval by the determination unit 120 and control unit 130.

Furthermore, in the second embodiment, the determination unit 120, for example, may determine whether the phase difference exists between the at least two motors by comparing the respective ripple voltages, thereby determining whether the at least two motors operate synchronously.

### [Operation of Motor control apparatus 100A]

An operation of a motor control apparatus 100A according to the second embodiment of the present disclosure, i.e., a motor control method, will now be described. FIG. 5 is a flowchart showing an operation of the motor control apparatus 100A according to the second embodiment of the present disclosure.

As shown in FIG. 5, in step S300, the motor control apparatus 100A acquires, by the status information acquisition unit 110, at least of the operating status information of the at least two motors and the device status information of the driven device, and then proceeds to step S501. Here, it is assumed that a ripple current of each of the at least two motors is acquired.

In step S501, the motor control apparatus 100A converts, by the conversion unit 140, the ripple currents of the at least two motors acquired by the status information acquisition unit 110 into ripple voltages of the at least two motors, respectively, and then proceeds to step S502.

In step S502, the motor control apparatus 100A determines, by the determination unit 120, whether the at least two motors operate synchronously, based on at least one of the operating status information acquired by the status information acquisition unit 110 and the device status information. When it is determined that the at least two motors operate synchronously ("YES" in step S502), the process ends; when it is determined that the at least two motors do not operate synchronously ("NO" in step S502), the process proceeds to step S304. Here, it is assumed that the determination unit 120 determines that there is a phase difference between the ripple voltages of the at least two motors by comparing the ripple voltages of the at least two motors, further determines that there is a phase difference between the at least two motors, and further determines that the at least two motors do not operate synchronously, thus proceeding to step S304.

In step S304, the motor control apparatus 100A controls, by the control unit 130, the at least two motors so that the at least two motors operate synchronously, and then the process ends. Here, it is assumed that the control unit 130 adjusts the input voltage of at least one of the at least two motors to eliminate the phase difference of the ripple voltage by using a second adjustment method, namely by at least one of the pulse width modulation, the phase modulation, and the frequency modulation, so that the at least two motors operate synchronously, and then terminates the process.

In this way, the motor control apparatus 100A according to the second embodiment possesses the technical effects of the first embodiment described above. Furthermore, in the second embodiment, by including the conversion unit 140, the ripple current can be converted into the ripple voltage capable of digital processing. Thus, it is possible to more accurately, reliably, and quickly determine whether the at least two motors operate synchronously, thereby further improving the performance of the motor control apparatus.

### (Third Embodiment)

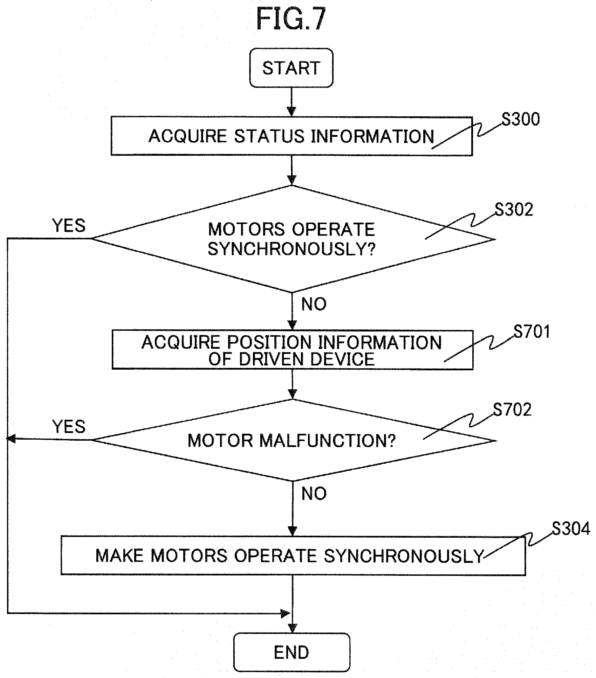

Next, referring to FIGs. 6 and 7, a motor control apparatus 100B of a third embodiment of the present disclosure will be described in detail.

### [Configuration of Motor control apparatus 100B]

FIG. 6 is a block diagram showing a configuration of the motor control apparatus 100B according to the third embodiment of the present disclosure. In FIG. 6, the same reference numerals are used for the same components as those in FIG. 2, which is the schematic diagram of the configuration of the motor control apparatus 100 of the first embodiment, and descriptions are omitted.

As shown in FIG. 6, the motor control apparatus 100B of the third embodiment differs from the motor control apparatus 100 of the first embodiment in that the motor control apparatus 100B of the third embodiment further includes a position information acquisition unit 150 and a malfunction determination unit 160.

The position information acquisition unit 150 may be configured, for example, by a component or module with information processing capabilities such as a CPU, an MCU, or the like. The position information acquisition unit 150 may acquire position information of the driven device. For example, in the specific example shown in FIG. 1, the position information acquisition unit 150 may acquire absolute position information (e.g., coordinates) of the movable display DS, or may acquire relative position information of the movable display DS on the guide rail LL, or may acquire relative position information of the movable display DS on the interior ceiling of the vehicle, or may acquire relative position information of the movable display DS relative to the limit position, the first motor 10, or the second motor 20. It is not particularly limited as long as the position information can be used to determine whether the movable display DS, serving as the driven device, is in a horizontal movement process, or whether the movable display DS is in the limit position or the accommodation position. Here, the limit position refers to a position where the movable display DS changes to the upright state after being moved horizontally, and the accommodation position refers to a position where the movable display DS is accommodated in a folded state when it is not in use.

The malfunction determination unit 160 may be configured, for example, by a component or module with information processing capabilities such as a CPU, an MCU, or the like. The malfunction determination unit 160 may determine whether a malfunctioning motor exists among the at least two motors, based on the position information, and at least one of the operating status information and the device status information, when the determination unit 120 determines that the at least two motors do not operate synchronously.

For example, in the specific example shown in FIG. 1, in a case where (a) the determination unit 120 determines that the at least two motors do not operate synchronously, and (b) it is determined that the movable display DS is not in the limit position or the accommodation position, based on the position information of the movable display DS, and (c) it is determined that the movable display DS is moving horizontally, based on the device status information, and (d) it is determined that the rotational speed of one motor is very small or close to zero, based on the operating status information, the malfunction determination unit 160 determines that the motor whose rotational speed is zero is malfunctioning.

Furthermore, for example, in the specific example shown in FIG. 1, in a case where (a) the determination unit 120 determines that the two motors do not operate synchronously, and (b) it is determined that the movable display DS is not in the limit position or the accommodation position, based on the position information of the movable display DS, and (c) it is determined that the difference in rotational speed between the two motors is extremely large or greater than a predetermined threshold, based on the operating status information, or it is determined that the rotational speed of at least one of the two motors is outside a reasonable range, the malfunction determination unit 160 determines that the motor whose rotational speed is outside the reasonable range is malfunctioning. Here, information such as the coordinate information of the limit position, the predetermined threshold, and the reasonable range of the rotational speed of the motor may be pre-stored in a built-in or external memory, and the malfunction determination unit 160 may retrieve and acquire the information as needed.

Furthermore, in the third embodiment, the control unit 130 controls the at least two motors so that the at least two motors operate synchronously, when the malfunction determination unit 160 determines that no malfunctioning motor exists. Here, the adjustment method by which the control unit 130 makes the at least two motors operate synchronously is the same as in the first embodiment, and will not be described again here.

### [Operation of Motor control apparatus 100B]

An operation of a motor control apparatus 100B according to the third embodiment of the present disclosure, i.e., a motor control method, will be described below. FIG. 7 is a flowchart showing an operation of the motor control apparatus 100B according to the third embodiment of the present disclosure.

As shown in FIG. 7, the processing of steps S300 to S302 is the same as that described in the first embodiment, and therefore will not be repeated here.

For example, in the third embodiment, in step S302, the motor control apparatus 100B determines, by the determination unit 120, that the at least two motors do not operate synchronously ("NO" in step S302), and proceeds to step S701.

In step S701, the motor control apparatus 100B acquires, by the position information acquisition unit 150, the position information of the driven device, and then proceeds to step S702. Here, for example, in the specific example shown in FIG. 1, the position information acquisition unit 150 acquires the relative position information of the movable display DS relative to the limit position.

In step S702, the motor control apparatus 100B determines, by the malfunction determination unit 160, whether a malfunctioning motor exists among the at least two motors, based on the position information of the driven device acquired by the position information acquisition unit 150, and at least one of the operating status information of each of the at least two motors acquired by the status information acquisition unit 110 and the device status information of the driven device. When it is determined that a malfunctioning motor exists among the at least two motors ("YES" in step S702), the processing of the motor control apparatus 100B ends, and the motor malfunction may be eliminated by other means. When it is determined that no malfunctioning motor exists among the at least two motors ("NO" in step S702), the process proceeds to step S304. Here, for example, in the specific example shown in FIG. 1, the malfunction determination unit 160 determines that no malfunctioning motor exists among the two motors, based on the relative position information of the movable display DS relative to the limit position and the operating status information of each of the two motors, and then the processing proceeds to step S304.

In step S304, the motor control apparatus 100B performs control by the control unit 130 so that the at least two motors operate synchronously, and then the processing ends. Here, the control unit 130 adjusts the input voltage of the at least one of the at least two motors so that the at least two motors operate synchronously, by using a second adjustment method, namely, by at least one of the pulse width modulation, the phase modulation and the frequency modulation. Then the processing ends.

In this way, the motor control apparatus 100B according to the third embodiment possesses the technical effects of the first embodiment described above. Furthermore, in the third embodiment, in a case where the determination unit 120 determines that the at least two motors do not operate synchronously, the malfunction determination unit 160 determines whether a malfunctioning motor exists among the at least two motors, based on the position information of the driven device acquired by the position information acquisition unit 150, and at least one of the operating status information acquired by the status information acquisition unit 110 and the device status information. When the malfunction determination unit 160 determines that no malfunctioning motor exists, the control unit 130 performs control so that the at least two motors operate synchronously. Thus, it is possible not only to more accurately, reliably, and quickly determine whether the at least two motors operate synchronously, but also to promptly and reliably identify whether the asynchronous operation of the two motors is due to a motor malfunction. Accordingly, it is possible to timely and reliably handle the asynchronous operation, thereby avoiding futile adjustments via the control unit 130 for motor malfunctions. Thus, it is possible to early and timely detect and adjust the tendency for the movement of the driven device to become unstable, thereby preventing such instability of the movement of the driven device from occurring and further improving the performance of the motor control apparatus.

Embodiments and modifications of the present disclosure have been described above, but these embodiments are only provided as examples and are not intended to limit the scope of the present disclosure. These embodiments and various modifications are included within the scope of the claims.

For example, in the above description, specific embodiments of the motor control apparatus and the motor control method were described in detail. However, the specific embodiments of the technical concept of the present disclosure are not limited to the above description, and may also be implemented in various forms such as a computer program product, an on-vehicle electronic device, and a vehicle.

According to an aspect of the present disclosure, a motor control apparatus for controlling at least two motors that drive a same driven device is provided. The motor control apparatus includes a status information acquisition unit configured to acquire at least one of operating status information of each of the at least two motors and device status information of the driven device; a determination unit configured to determine, based on at least one of the operating status information and the device status information acquired by the status information acquisition unit, whether the at least two motors operate synchronously; and a control unit configured to control the at least two motors so that the at least two motors operate synchronously, when the determination unit determines that the at least two motors do not operate synchronously.

Preferably, in the motor control apparatus of the present disclosure, when the status information acquisition unit acquires at least one of the operating status information and the device status information, the determination unit may determine whether a phase difference exists between the at least two motors based on at least one of the operating status information and the device status information, thereby determining whether the at least two motors operate synchronously.

Preferably, in the motor control apparatus of the present disclosure, the operating status information may be a ripple current of each of the at least two motors. The determination unit may determine, by comparing the ripple currents of the at least two motors, whether the phase difference exists between the at least two motors.

Preferably, the motor control apparatus of the present disclosure may further include a conversion unit configured to convert the ripple currents of the at least two motors into ripple voltages of the at least two motors, respectively. The determination unit may determine, by comparing the ripple voltages of the at least two motors, whether the phase difference exists between the at least two motors.

Preferably, in the motor control apparatus of the present disclosure, the device status information may include at least one of an angle, an angle change, a moving speed, and a moving speed change of the driven device during movement.

Preferably, in the motor control apparatus of the present disclosure, the determination unit may determine that the at least two motors do not operate synchronously when at least one of the following conditions is satisfied: the angle is greater than or equal to an angle threshold, the angle change is greater than or equal to an angle change threshold, the moving speed is less than or equal to a moving speed lower limit, the moving speed is greater than or equal to a moving speed upper limit, or the moving speed change is greater than or equal to a moving speed change threshold.

Preferably, in the motor control apparatus of the present disclosure, the control unit may adjust an input voltage of at least one of the at least two motors, so that the at least two motors operate synchronously.

Preferably, in the motor control apparatus of the present disclosure, the control unit may adjust the input voltage of at least one of the at least two motors by at least one of pulse width modulation, phase modulation, and frequency modulation, so that the at least two motors operate synchronously.

Preferably, in the motor control apparatus of the present disclosure, the control unit may adjust a rotational speed of at least one of the at least two motors, so that the at least two motors operate synchronously.

Preferably, the motor control apparatus of the present disclosure may further include a position information acquisition unit configured to acquire position information of the driven device; and a malfunction determination unit configured to determine, based on the position information, and at least one of the operating status information and the device status information, whether a malfunctioning motor exists among the at least two motors, when the determination unit determines that the at least two motors do not operate synchronously. The control unit may control the at least two motors so that the at least two motors operate synchronously, when the malfunction determination unit determines that no malfunctioning motor exists.

According to another aspect of the present disclosure, a motor control method for controlling at least two motors that drive a same driven device is provided. The motor control method includes acquiring at least one of operating status information of each of the at least two motors and device status information of the driven device; determining, based on at least one of the operating status information and the device status information, whether the at least two motors operate synchronously; and controlling the at least two motors so that the at least two motors operate synchronously, when the at least two motors do not operate synchronously.

According to another aspect of the present disclosure, a computer program product comprising a computer program is provided. When executed by a processor, the computer program implements the motor control method described above.

According to another aspect of the present disclosure, an on-vehicle electronic device is provided. The on-vehicle electronic device may include the motor control apparatus described above.

According to another aspect of the present disclosure, a vehicle is provided. The vehicle may include the motor control apparatus described above; a movable display panel serving as the driven device; and the at least two motors driving the movable display panel.

According to the motor control apparatus, the motor control method, the computer program product, the on-vehicle electronic device, and the vehicle of the present disclosure, it is possible to early and timely detect and adjust the tendency for the movement of the driven device to become unstable, thereby preventing such instability of the movement of the driven device from occurring.

## Claims

1. A motor control apparatus for controlling at least two motors that drive a same driven device, the motor control apparatus comprising:
a status information acquisition unit configured to acquire at least one of operating status information of each of the at least two motors and device status information of the driven device;
a determination unit configured to determine, based on at least one of the operating status information and the device status information acquired by the status information acquisition unit, whether the at least two motors operate synchronously; and
a control unit configured to control the at least two motors so that the at least two motors operate synchronously, when the determination unit determines that the at least two motors do not operate synchronously.

2. The motor control apparatus as claimed in claim 1,
wherein when the status information acquisition unit acquires at least one of the operating status information and the device status information, the determination unit is configured to determine whether a phase difference exists between the at least two motors based on at least one of the operating status information and the device status information, thereby determining whether the at least two motors operate synchronously.

3. The motor control apparatus as claimed in claim 2,
wherein the operating status information is a ripple current of each of the at least two motors, and
the determination unit is configured to determine, by comparing the ripple currents of the at least two motors, whether the phase difference exists between the at least two motors.

4. The motor control apparatus as claimed in claim 3, further comprising:
a conversion unit configured to convert the ripple currents of the at least two motors into ripple voltages of the at least two motors, respectively,
wherein the determination unit is configured to determine, by comparing the ripple voltages of the at least two motors, whether the phase difference exists between the at least two motors.

5. The motor control apparatus as claimed in one of claims 1 to 4,
wherein the device status information includes at least one of an angle, an angle change, a moving speed, and a moving speed change of the driven device during movement.

6. The motor control apparatus as claimed in claim 5,
wherein the determination unit is configured to determine that the at least two motors do not operate synchronously when at least one of the following conditions is satisfied:
the angle is greater than or equal to an angle threshold,
the angle change is greater than or equal to an angle change threshold,
the moving speed is less than or equal to a moving speed lower limit,
the moving speed is greater than or equal to a moving speed upper limit, or
the moving speed change is greater than or equal to a moving speed change threshold.

7. The motor control apparatus as claimed in one of claims 1 to 6,
wherein the control unit is configured to adjust an input voltage of at least one of the at least two motors, so that the at least two motors operate synchronously.

8. The motor control apparatus as claimed in claim 7,
wherein the control unit is configured to adjust the input voltage of at least one of the at least two motors by at least one of pulse width modulation, phase modulation, and frequency modulation, so that the at least two motors operate synchronously.

9. The motor control apparatus as claimed in one of claims 1 to 8,
wherein the control unit is configured to adjust a rotational speed of at least one of the at least two motors, so that the at least two motors operate synchronously.

10. The motor control apparatus as claimed in one of claims 1 to 9, further comprising:
a position information acquisition unit configured to acquire position information of the driven device; and
a malfunction determination unit configured to determine, based on the position information, and at least one of the operating status information and the device status information, whether a malfunctioning motor exists among the at least two motors, when the determination unit determines that the at least two motors do not operate synchronously,
wherein the control unit is configured to control the at least two motors so that the at least two motors operate synchronously, when the malfunction determination unit determines that no malfunctioning motor exists.

11. A motor control method for controlling at least two motors that drive a same driven device, the motor control method comprising:
acquiring at least one of operating status information of each of the at least two motors and device status information of the driven device;
determining, based on at least one of the operating status information and the device status information, whether the at least two motors operate synchronously; and
controlling the at least two motors so that the at least two motors operate synchronously, when the at least two motors do not operate synchronously.

12. A non-transitory computer-readable recording medium having computer-executable instructions for execution by one or more processors, wherein, the computer-executable instructions, when executed, cause the one or more processors to carry out a motor control method according to claim 11.
